# EUROPÄISCHE PATENTSCHRIFT

(11) **EP 2 281 726 B1**
(45) Veröffentlichungstag und Bekanntmachung des Hinweises auf die Patenterteilung: **03.05.2017**
(21) Anmeldenummer: 10162003.7
(22) Anmeldetag: 05.05.2010
(51) Int. Cl.: B60T 15/04, B60T 15/16, B60T 15/60, B60T 17/04

(54) **Luftbremskopf für Rangier- und Zugfahrten**
Pneumatic brake head for shunting and train travel
Tête de freinage pneumatique pour trajets de manoeuvre et de train

(30) Priorität: 03.08.2009 DE 102009036469; 03.08.2009 DE 202009010666 U
(43) Veröffentlichungstag der Anmeldung: 09.02.2011
(73) Patentinhaber: UPZ Sitech GmbH, 06769 Brehna (DE)
(72) Erfinder: Zeranski, Peter, 06188, Landsberg (DE)
(74) Vertreter: Gulde & Partner

(56) Entgegenhaltungen:
- EP-A2- 0 618 120
- WO-A1-2007/008512
- DE-A1- 3 406 601
- DE-A1- 3 407 039
- DE-A1- 3 811 109
- FR-A1- 2 289 376
- GB-A- 887 629
- US-A- 4 326 754
- US-A- 4 878 513
- US-A- 5 211 698
- US-A- 5 410 894
- US-A1- 2005 082 126

## Beschreibung

Die Erfindung betrifft einen Luftbremskopf für Rangier- und Zugfahrten mit der Funktion des Entlüftens der Druckluftanlage zusammengekoppelter Waggons eines Zuges zur Erzielung einer Vollbremsung in Notsituationen oder einer dosierten Bremsung durch manuell einleit- und wiederholbare Druckverminderungen, indem ein Auslöshebel den Luftbremskopf entweder in eine nicht reversible Endstellung vollständig öffnet oder mittels einer rückstellbaren Raststufe bedarfsweise Druckluft aus dem Druckluftkreislauf entweichen lässt und somit das Anlegen der Bremsklötze an die Radreifen von Waggons stufenlos verstärkt beziehungsweise durch sein Schließen die Bremswirkung, durch Wirken des sich permanent auf ein bestimmtes Niveau einregelnden Drucks im Luftkreislauf, wieder vermindert.
Der Luftbremskopf kann durch wenige Handgriffe an die Kupplung der Hauptluftleitung in üblicher Weise angesetzt und gesichert werden, wobei er zu seiner temporären Lagesicherung, die Voraussetzung zu über ein Seil oder einer entsprechenden Kette ausübbaren manuellen Bedienung ist, in der Nähe der Waggonkupplung am Schlauchhalter vorübergehend eingehängt ist.

Bereits zu Beginn der Entwicklung Druckluft gebremster Eisenbahnwaggons war es ein Problem zwischen beladenen und unbeladenen Waggons eine angepasste Bremswirkung bei Rangier- und / oder Zugfahrten herzustellen.
Bei den Druckluftbremsen wurden zur Verstärkung der Bremskraft neben den Einkammerbremszylindern und Zweikammerbremszylindern zuzüglich in besonderen Ausführungen - auch noch Druckausgleichsgefäße hinzugefügt.
Auch über relativ komplizierte und technisch aufwendige Hebelsysteme wurde nach verbesserten Lösungen zur Bremskraftverstärkung gesucht.

Nachfolgend soll beispielhaft auf den gefundenen Stand der Technik eingegangen werden.

Ein Luftbremskopf ist beispielsweise in US 4,326,754 offenbart. Ferner ist nach AT89083 eine Einrichtung zur Abänderung der Kunze-Knorr-Bremse auf Abbremsung in drei Gewichtsstufen bekannt. Der Unterschied in der Bremswirkung bezüglich beladener und unbeladener Waggons wird hier dadurch angeglichen, indem ein Reduktionsventil in eine zweistufige Bremsanlage integriert wird und dadurch eine dreistufige Abbremsung möglich ist. Die Umstellung des Luftbremshahns wird dabei in der Regel manuell von Hand durchgeführt. Durch die Erfindung sollte es auch möglich sein, einen selbsttätigen und gleitenden Übergang der Bremswirkung zwischen den drei Gewichtsstufen zu gestatten. Mit DE 412347 wurde eine Vorrichtung zur Vergrößerung der Bremskraft bei der Kunze-Knorr-Bremse vorgeschlagen. Die regelbare Bremskraft im Sinne der Verstärkung als auch im Sinne der Abschwächung wird in einer Einkammer- / Zweikammerbremsanlage dadurch erreicht, indem über eine "über das Steuerventil zum Einkammerbremszylinder führende Leitung ein Behälter angeschlossen [ist], der das Fassungsvermögen des Totraumes um das den zweiten Einkammerbremszylinder entsprechende Maß vergrößert und durch eine Schaltvorrichtung überwacht [wird], die mit derjenigen zweckmäßig zwangsläufig gekuppelt ist, ...".

In DE 636886 wird eine Bremsgestängeanordnung für die Kunze-Knorr-Bremse vorgeschlagen, bei der ein Einkammerzylinderhebel und ein Fixpunkthebel über eine Verbindungsstange miteinander verbunden sind, während eine weitere Stange einen Zweikammerzylinderhebel und einen Fixpunkthebel miteinander verbindet. Letztere Verbindung ermöglicht ein Übertragungsverhältnis zur Bremskraftverstärkung, wobei die erzielbare Bremskraft über die hinausgeht, die beim Zusammenwirken von Einkammer- und Zweikammerzylinder erreichbar ist. Die Bremswirkung beladener Waggons wird danach erheblich vergrößert.

DE 400560 gibt eine Rangierbremse an. Sie reguliert über ein Hebelsystem eine erzeugbare Bremswirkung durch Anlegen eines Gewichtshebels, wodurch der Luftwiderstand von Waggons verschiedener Bauart und Gewichts derart verändert wird, dass gleiche oder nahezu gleiche Laufgeschwindigkeiten erzielt werden. Seil- oder Kettenscheiben, auf der Achse des Gewichtshebels sitzend, mit entsprechendem Seil oder Kette beeinflussen beim Umlegen des Gewichtshebels ein mit dem anderen Ende dieser Übertragungsmittel verbundenes Bremsgestänge. Es wird dadurch eine dem Moment des Gewichtshebels entsprechende Kraft zum Ausschlag gebracht.

In Auswertung des bereits seit längerem bekannten Standes der Technik kann gezeigt werden, dass dem Anspruch eines dosierten Abbremsens geschobener Güter- oder Personenzugwaggons unter anderem in Abhängigkeit eines unterschiedlichen Beladungsgewichts mit relativ komplizierten Eingriffen in eine bestehende Druckluftbremsanlage Rechnung getragen wurde und bis heute wird. Um eine geschobene Zugeinheit, die vom Führerstand einer Lokomotive aus nur schlecht bis zu deren Ende überblickt werden kann, möglichst genau an einem Endpunkt zum Halten zu bewegen, muss daher nach einer einfacheren Lösung gesucht werden, die kostengünstig ist und sicher funktioniert.

Es ist daher Aufgabe der Erfindung, einen modifizierten Luftbremshahn im Sinne eines Luftbremskopfes vorzuschlagen, der manuell von einem Bremsberechtigten (Rangierer) am Ende einer Zugsektion und dort an die Hauptluftleitung ansetzbar und in der Nähe einer Waggonkupplung am Schlauchhalter einhängbar ist, wobei es der Luftbremskopf gestattet, über einen schwenkbaren Ventilteller in Kombination mit einem Auslösehebel entweder in einer rückstellbaren, federbelasteten Bewegung schubweise Druckluft aus der Luftleitung entweichen zu lassen oder in einer nichtrückstellbaren Auslenkung des Auslösehebels eine vollständige Entleerung der Luftleitung durchzuführen. Letzteres würde eine sogenannte "Notbremsung", oder einen vollen Anschlag aller Bremsklötze geschobener Waggons bedeuten. Der Auslösehebel soll dabei in einer sicheren, standfesten Position eines Rangierers von einer Plattform aus, über ein Zugmittel (Seil, Kette) bewegt werden können.

Die erfindungsgemäße Aufgabe wird wie folgt gelöst, wobei hinsichtlicht der grundlegenden Gedanken auf den Patentanspruch 1 verwiesen wird.
Die weitere Ausgestaltung der Erfindung erfolgt in den Ansprüchen 2 bis 5.

Zur Erläuterung der Erfindung sind weitere Hinweise erforderlich.

Der Luftbremskopf besteht aus einem Metallgehäuse, gefertigt in Guss oder mittels spannender Formgebung, welches im Wesentlichen in einen zylindrischen Teil zur Aufnahme der Elemente zur Regulierung des Bremsdruckes und einen Teil zur Anlage und Verspannung an einer Hauptluftleitung untergliedert ist. Beide Teile stehen über im Inneren des zylindrischen Teils des Gehäuses ringförmig angebrachte Bohrungen miteinander in Verbindung, wobei eine an einer Welle angebrachte Nutenscheibe mit einer in ihr eingepresste Quetschdichtung elastischen Materials, insbesondere eines Elastomers, sich durch Federdruck einer Druckfeder an einem darüberliegenden Ventilteller anpresst. Die Ausnehmungen am Rande der Nutenscheibe ermöglichen es, bei Auslenken der Achse schubweise den Bremsdruck zu vermindern, wobei eine konzentrische Rückstellung der Achse in senkrechter Normallage in einer ersten Auslenkungsstellung möglich ist. Für diese Dosierung in einer ersten Auslenkungsstellung und auch in einer weiteren nicht reversiblen Endstellung - zum völligen Evakuieren der Hauptluftleitung - befindet sich ein Arretierkegel mit Federlast in Wirkverbindung mit der seitlich auslenkbaren Achse nebst Nutenscheibe. Das Gehäuse des Luftbremskopfes weist an der Kupplungshälfte für den Hauptbremsschlauch einen Sicherungshebel auf, der an einer seiner Längsseiten, zwecks Aufbringung einer exzentrischen Andruckkraft, abgeschrägt ist. Weiterhin befindet sich gegenüber dem zylindrischen Teil des Luftbremskopfes und hinter der Lagerung des schwenkbaren Sicherungshebels eine aus parallelen Flächen des Gehäuses gebildete Gabelung mit einem diese abschließenden Bolzen, der eine einseitig plane Fläche besitzt. Über die Gabelung und dem sie abschließenden / begrenzenden Bolzen ist es möglich, den neuartigen Luftbremskopf in die Nähe einer Waggonkupplung am Schlauchhalter temporär einzuhängen. Am oberen Ende der aus dem Gehäuse herausragenden Achse ist ein Betätigungshebel mit seitlichen Bohrungen zum Einklinken einer Reißleine / -kette befestigt, wodurch aus standfester Lage und in sicherer Entfernung von einer Plattform eines Waggongs aus die veränderbaren Stellungen rückstellbar / nicht rückstellbar der Achse einleitbar sind. Die Nichtrückstellbarkeit der Achse kann erreicht werden, wenn die Zugkraft an der Reißleine oberhalb 10 kp liegt.
Sicherungsringe verschiedenen Durchmessers sorgen dafür, dass alle drehbeweglichen Teile, insbesondere die, die in der Flucht der Achse liegen, ihre Lage nicht verlassen können.

Die Erfindung soll nachfolgend anhand eines Ausführungsbeispiels näher erläutert werden. Dazu wird auf nachfolgende Figuren zurückgegriffen.
- Figur 1:: Perspektivische Gesamtdarstellung des Luftbremskopfes

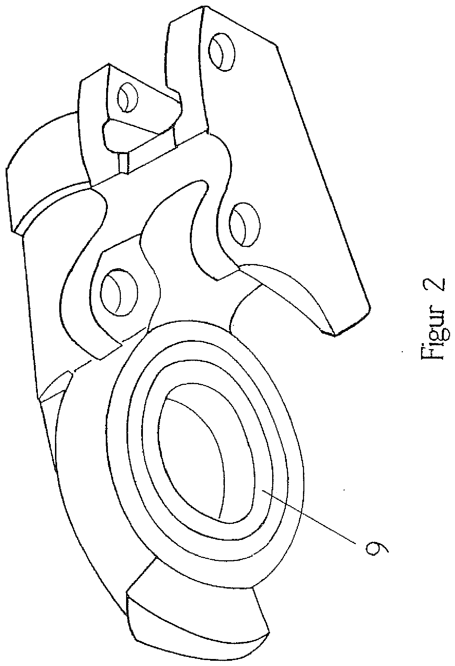

- Figur 2:: Darstellung des Gehäuses

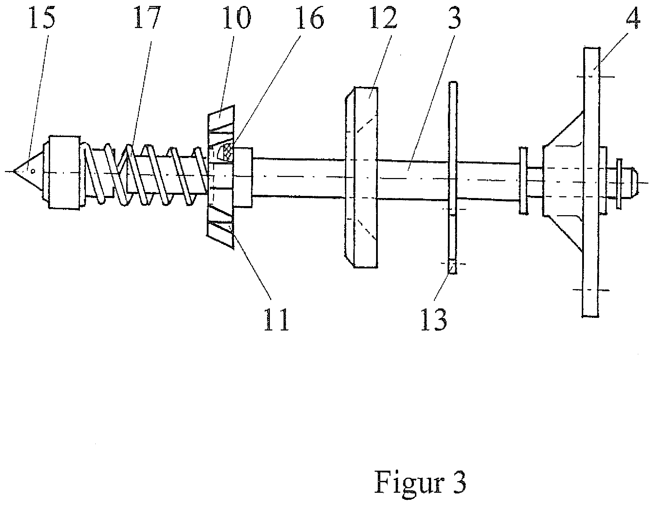

- Figur 3:: Darstellung der Achse mit angelagerten Elementen

Die Bedeutungen der darin verwendeten Bezugszeichen ergeben sich aus der anliegenden

### Bezugszeichenliste.

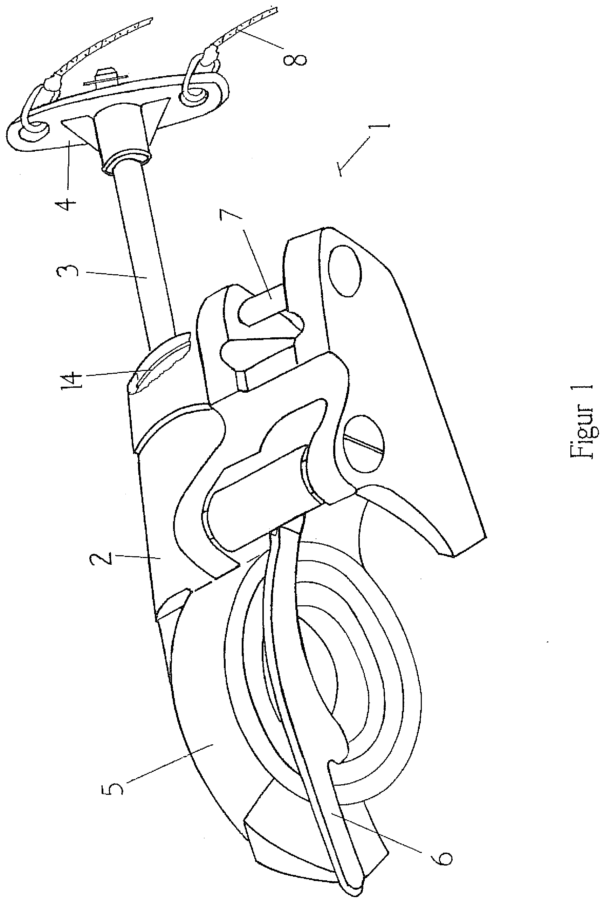

Ein Luftbremskopf 1 gemäß Figur 1 besitzt ein kompaktes im Wesentlichen in 2 Teile zu gliederndes Metallgehäuse, zum Beispiel aus Aluminium-Druckguß bestehend. Es sind da zu nennen der üblicherweise vorhandenen Teil einer Kupplungshälfte für die Anbringung an die Hauptluftleitung eines Eisenbahnwaggons und ein zylindrischer Teil, der insbesondere alle beweglichen Elemente zur Regulierung des Bremsdruckes beinhaltet. So sind an einer Achse 3 an ihrem nach außen ragenden Teil ein Betätigungshebel 4 und im Inneren Teil des Gehäuses befindlichen Abschnitts der Achse 3 ein mit einem Seegerring 13 in Position gehaltener Ventilteller 12, eine diesen folgende Nutenscheibe 10, die über eine Druckfeder 17 mit einem Arretierkegel 15 in Verbindung steht, angeordnet, wobei eine definiert in 2 Stufen mögliche Schwenkbarkeit der Achse 3 gegeben ist. Die Schwenkbarkeit ist von jedem Punkt innerhalb eines Kreises von 360° möglich.
Dabei ist zu sagen, dass die erste definierte Auslenkstufe im Sinne eines Tasters reversibel ausführbar und die zweite stärker ausgelenkte Position der Achse 3 eine reversible Endstellung mit voller Öffnung des Druckluftauslasses darstellt, da hier die Rückstellbarkeit über die Druckfeder 17 nicht mehr möglich ist.

Die Nutenscheibe 10 besitzt am Rande ihres Umfanges Ausnehmungen 11, die mit Innenbohrungen am Grund des zylindrischen Gehäuses des Luftbremskopfes 1 kreisförmig angebracht sind, in Wirkverbindung stehen. Eine in die Nutenscheibe 10 eingelassene Quetschdichtung 16 mit ihrer Lage in Richtung des auf ihr lastenden Ventiltellers 12 dichtet in konzentrischer Position die Achse 3 nach außen ab.
Der Luftbremskopf 1 ist mittels der gabelförmigen Ausbildung des Gehäuses und einem als Quersteg dort eingebauten Bolzens temporär in der Nähe einer Waggonkupplung am Schlauchhalter einhängbar und er kann sicher über eine Reißleine 8 von einer Plattform eines Waggons dosiert oder voll geöffnet werden.

Die Vorteile der Erfindung können wie folgt beschrieben werden:
- durch die in der Nutenscheibe integrierten Quetschdichtung werden Vereisungen oder Verölungen vermieden
- Schutz vor eindringendem Staub o. ä.
- Gesteuerte Dosierung der Druckminimierung im Bremssystem einer geschobenen Zugsektion
- Bedienung der Achse innerhalb von 360° möglich
- unkomplizierte und sichere Montage sowie Bedienung sind gegeben

### Bezugszeichenliste

- 1: - Luftbremskopf
- 2: - zylindrisches Gehäuseteil
- 3: - Achse
- 4: - Betätigungshebel
- 5: - Kupplungshälfte
- 6: - Sicherungshebel
- 7: - Bolzen mit Abflachung
- 8: - Reißleine
- 9: - Dichtung Kupplungshälfte
- 10: - Nutenscheibe
- 11: - Ausnehmung
- 12: - Ventilteller
- 13: - Seegerring
- 14: - O-Ring
- 15: - Arretierkegel
- 16: - Quetschdichtung
- 17: - Druckfeder

## Patentansprüche

1. Luftbremskopf für Rangier- und Zugfahrten, bestehend aus einem Metallgussgehäuse mit einer Kupplungshälfte nebst Sicherungsbügel zum Ansatz an eine Hauptluftleitung eines Eisenbahnwaggons, wobei aus einer um 90° zur Kupplungshälfte versetzten kreisförmigen Öffnung, die sich nach innen zu einem Zylinder fortsetzt eine Achse herausragt, die an ihrem Außenende einen Betätigungshebel für eine Reißleine aufweist, **gekennzeichnet dadurch, dass** am unteren Ende der Achse (3) eine Nutenscheibe (10) mit einer konzentrisch eingepressten Quetschdichtung (16) sitzt, wobei sich die Nutenscheibe (10) durch eine axial auf sie wirkende Federkraft mittels einer Druckfeder (17) an einen über sie liegenden Ventilteller (12) abstützt und die Achse (3) formschlüssig in einen Arretierkegel (15) eingreift, wobei sie definiert auslenkbar in mindestens 2 Stufen ist, und zwar, in einer ersten rückfedernd in die konzentrische Ausgangsstellung und in einer zweiten vergrößerten seitlichen Auslenkung dort mittels einer Einrastung ihre Endlage einnimmt.

2. Luftbremskopf nach Anspruch 1, **gekennzeichnet dadurch dass** die Nutenscheibe (10) am Seitenrand Ausnehmungen (11) in regelmäßigen Abständen aufweist und sie beim Schwenken der Achse (3) in Wirkverbindung mit Entlüftungsbohrungen im Inneren des Gehäuses stehen.

3. Luftbremskopf nach Anspruch 1 und 2, **gekennzeichnet dadurch, dass** mittels der beiden einstellbaren Stufen des Schwenkens der Achse (3) Druckverminderungen im Bereich von 0,5 bis 1,5 bar einstellbar sind.

4. Luftbremskopf nach Anspruch 1, **gekennzeichnete dadurch, dass** eine nicht reversible Endstellung der Achse (3) mittels eines Zuges der Reißleine (8) bei einer Zugkraft von > 10 kp herstellbar ist.

5. Luftbremskopf nach Anspruch 1, **gekennzeichnet dadurch, dass** die Nutenscheibe (10) als nach allen Seiten schwenk- und drehbar ausgebildet ist.

## Claims

1. Pneumatic brake head for shunting and train travel, consisting of a cast metal housing with a coupling half together with a retaining clip for attachment to a main air line of a railway car, wherein an axle comprising an actuation lever for a trigger line at its external end protrudes from a circular opening offset by 90° relative to the coupling half and projecting inwardly to a cylinder, **characterized in that**, at the lower end of the axle (3), a groove disk (10) having a concentrically forced-in press-seal (16) is located, wherein the groove disk (10) is supported on a valve disk (12) located above it by a spring force axially acting upon it by means of a compression spring (17), and the axle (3) engages positively into a locking cone (15), the axle (3) being deflectable in a defined manner in at least two stages: in a first one, it can be resiliently deflected into the concentric initial position, and, in a second increased lateral deflection, it there assumes its end position by means of a latching.

2. Pneumatic brake head according to claim 1, **characterized in that** the groove disk (10) comprises recesses (11) at the lateral edge at regular intervals and **in that** these are in operative connection with vent bores in the interior of the housing upon pivoting the axle (3).

3. Pneumatic brake head according to claim 1 and 2, **characterized in that** pressure reductions can be set in the range of 0,5 bar to 1,5 bar by means of the two adjustable stages for pivoting the axle (3).

4. Pneumatic brake head according to claim 1, **characterized in that** a non-reversible end position of the axle (3) can be established by pulling the trigger line (8) at a pulling force of > 10 kp.

5. Pneumatic brake head according to claim 1, **characterized in that** the groove disk (10) is designed to be pivotable and rotatable in all directions.

## Revendications

1. Tête de freinage pneumatique pour trajets de manoeuvre et de train, constituée d'un boîtier en métal coulé ayant un demi-accouplement avec un étrier de sécurité, destinée à être attachée à une conduite d'air principale d'un véhicule ferroviaire, un axe comprenant un levier d'actionnement pour une corde de déclenchement à son extrémité extérieure faisant saillie d'une ouverture circulaire décalée de 90° par rapport au demi-accouplement laquelle se prolonge vers l'intérieur jusqu'à un cylindre, **caractérisée en ce qu'**un disque à rainures (10) ayant un joint écrasé (16) enfoncé de manière concentrique est situé à l'extrémité inférieure de l'axe (3), le disque à rainures (10) s'appuyant contre une tête de soupape (12) située au-dessus de lui par une force élastique agissant axialement sur lui, au moyen d'un ressort de pression (17), et l'axe (3) s'engageant par liaison de forme dans un cône de blocage (15), l'axe (3) étant déplaçable de manière définie en au moins deux étapes : dans une première étape, il peut revenir élastiquement dans la position initiale concentrique, et, dans un second déplacement latéral plus grand, il y occupe sa position finale au moyen d'un encliquetage.

2. Tête de freinage pneumatique selon la revendication 1, **caractérisée en ce que** le disque à rainures (10) comprend des évidements (11) sur le bord latéral à des intervalles réguliers et que ceux-ci sont en liaison fonctionnelle avec des perçages de désaération à l'intérieur du boîtier lors du pivotement de l'axe (3).

3. Tête de freinage pneumatique selon les revendications 1 et 2, **caractérisée en ce que** des réductions de pression peuvent être réglées dans la plage comprise entre 0,5 bar et 1,5 bar au moyen des deux étapes réglables du pivotement de l'axe (3).

4. Tête de freinage pneumatique selon la revendication 1, **caractérisée en ce qu'**une position finale non réversible de l'axe (3) peut être établie par traction de la corde de déclenchement (8) à un niveau de traction de > 10 kp.

5. Tête de freinage pneumatique selon la revendication 1, **caractérisée en ce que** le disque à rainures (10) est réalisé de manière à pouvoir pivoter et tourner dans toutes les directions.
